# EUROPÄISCHE PATENTANMELDUNG

(11) **EP 1 314 765 A1**
(43) Veröffentlichungstag der Anmeldung: **28.05.2003**
(21) Anmeldenummer: 02026360.4
(22) Anmeldetag: 25.11.2002
(51) Int. Cl.: C09D 7/12, C08J 7/04, B60J 10/00

(54) **Beschichtungsmasse und ihre Verwendung für das Herstellen von funktionellen Beschichtungen auf Formteilen aus Kautschuk**

(30) Priorität: 26.11.2001 DE 20119233 U
(71) Anmelder: L. Böwing GmbH, 65719 Hofheim/Ts. (DE)
(72) Erfinder: Böwing, Michael, 65719 Hofheim-Langenhain (DE); Böwing, Herbert, 65719 Hofheim (DE); Germeshausen, Joachim, Dr., 56377 Nassau (DE)
(74) Vertreter: Hoffmann, Peter

(57) **Zusammenfassung**

Eine Beschichtungsmasse zum Überziehen von Kautschuk oder Elastomeren enthält ein synthetisches Harz und zusätzlich inerte Partikeln, vorzugsweise aus organischem Material mit vorzugsweise runder, annähernd sphärischer Geometrie. Die Beschichtungsmasse eignet sich zum Herstellen einer Beschichtung auf Formteilen aus Kautschuk oder Elastomeren, mit der Geräuschentwicklungen beim Verschieben der Formteile über Fahrzeuglack oder Glas unterdrückt werden.

## Beschreibung

Die vorliegende Erfindung betrifft eine Beschichtungsmasse enthaltend Harz und ihre Verwendung zum Überziehen von Kautschuk. Die Erfindung betrifft auch eine mit der Beschichtungsmasse hergestellte funktionelle Beschichtung auf Formteilen aus Kautschuk, die besonders vorteilhaft im Automobilbau eingesetzt werden.

Formteile aus Kautschuk, beispielsweise aus thermoplastischen Elastomeren (TPE), aus elastomeren Terpolymeren aus Ethylen, Propylen und anderen nicht konjugierten Dienen (EPDM), aus elastomeren Copolymeren aus Acrlynitril-Butadien-Rubber (NBR) oder aus elastomeren Polyurethanen werden im Automobilbau vielfach als Dichtungsleisten im Bereich beweglicher Teile wie Türen, Kofferraumdeckel oder Schiebedächern eingesetzt. Der Kautschuk dieser Dichtungsleisten steht dabei über den gesamten Rand von zu verschließenden Öffnungen mit dem lackierten Metall der Fahrzeugaußenhaut in direktem Kontakt. Dadurch wird das Eindringen von Feuchtigkeit oder Regen- oder Spritzwasser in den Innenraum der Fahrzeuge verhindert.

Um die Oberfläche der mechanisch sehr belasteten Dichtungen aus Kautschuk haltbarer zu machen gegen Witterungseinflüsse oder andere Umwelteinflüsse wie UV-Strahlung, denen sie bei ihrem bestimmungsgemäßen Einsatzzweck pausenlos ausgesetzt sind, wird der Kautschuk üblicherweise mit einem schützenden Überzug aus einer Harzmasse versehen. Damit wird die Haltbarkeit der damit hergestellten Dichtungen über einen längeren Zeitraum wirksam verlängert.

Die DE-A 199 45 848 beschreibt bereits eine Polyurethanlack-Zusammensetzung, die zusätzlich noch weitere Additive zur Gleitverbesserung, zur Haftverbesserung und zur Vernetzung enthalten können und die geeignet ist als Überzug für Dichtungsprofile aus Elastomeren im Automobilbau.

Auch die DE-A 39 22 224 beschreibt Dichtstreifen aus Gummi oder Kunststoff, bei denen teilchenförmiges Material aus Polyurethan, Polypropylen oder Polyamid durch Erwärmen auf die Oberfläche der Dichtstreifen aufgesintert ist.

Als Nachteil hat sich aber herausgestellt, dass alle bekannten Überzüge auf Dichtungen aus Kautschuk die Ursache für eine immer währende Geräuschkulisse während der Reise aus einer Mischung von Quietsch- und Knackgeräuschen sind, die im Innenraum der Fahrzeuge zu hören ist und bei ansonsten leiser werdenden Fahrgeräuschen, insbesondere beim Auftreten von Bodenunebenheiten, das Fahrvergnügen der Reisenden eintrüben. Noch lautere Geräusche entstehen auch beim Öffnen und Schließen von Fahrzeugöffnungen wie Schiebedächern oder Schiebetüren. Die Geräusche entstehen, wenn sich die Oberfläche von Dichtung einerseits und die von Fahrzeuglack oder Glas andererseits aufeinander verschieben oder während der Fahrt durch die Erschütterungen des Fahrzeugs um Bruchteile von Millimetern gegeneinander hin- und herbewegen.

Die Fachwelt sucht daher seit einiger Zeit mit zunehmender Dringlichkeit nach einem gangbaren Weg, auf dem das leidige Problem der Störgeräusche im Fahrzeuginnenraum beseitigt, trotzdem aber die Wirkung der Dichtungen aus Kautschuk über längere Zeit weiter gewährleistet ist.

Aufgabe der vorliegenden Erfindung war es deshalb, eine Beschichtungsmasse für Kautschuk zu finden, die einerseits eine gute Haftung zur Oberfläche von Kautschuk besitzt, andererseits eine ausreichende Schutzwirkung ausübt, die ferner durch die elastischen Verformungen, denen die Kautschukteile während ihres bestimmungsgemäßen Einsatzzweckes über Jahre hinweg immerfort unterworfen sind, nicht in Mitleidenschaft gezogen wird und die vor allem im Kontakt zu anderen Oberflächen wie Schutzlack oder Glas bei Bewegung auf diesen Oberflächen keine hörbare Geräuschentwicklung hervorruft.

Gelöst wird diese Aufgabe erfindungsgemäß durch eine Beschichtungsmasse der eingangs genannten Gattung, deren kennzeichnendes Merkmal darin zu sehen ist, dass sie ein synthetisches Harz enthält und zusätzlich inerte Partikeln in einer Menge im Bereich von 0,1 bis 50 Gew.-%, bezogen auf das Gesamtgewicht der Beschichtungsmasse.

Als synthetische Harze eignen sich neuerungsgemäß prinzipiell solche Harze, die dem Fachmann als Acrylharze, Alkydharze, Epoxidharze, Melaminharze, Phenolharze, Polyesterharze oder Siliconharze bekannt sind, wobei die Siliconharze erfindungsgemäß bevorzugt sind. Von diesen sind insbesondere die vernetzbaren Phenylsiliconharze besonders bevorzugt, die eine verbesserte Elastizität bei gleichzeitig verbesserter Temperaturbeständigkeit aufweisen.

Die inerten Partikeln können im Rahmen der Erfindung im Prinzip anorganische Materialien sein wie Talkum, Kalziumkarbonat, Bariumcarbonat, Bariumsulfat, Siliziumdioxid, Titandioxid und ähnliche. Bevorzugt werden erfindungsgemäß aber organische Partikeln aus wasserunlöslichem Harnstoffpolykondensat oder aus Polymeren, insbesondere aus Polyethylen, Polypropylen, Polyamid, Polymethylmethacrylat (PMMA), Siliconelastomer oder Polystyrol eingesetzt.

Die inerten Partikeln sind erfindungsgemäß bevorzugt in einer Menge im Bereich von 0,5 bis 40 Gew.-%, besonders bevorzugt von 1 bis 30 Gew.-%, in dem synthetischen Harz enthalten, wobei sich als ganz besonders günstig eine Menge im Bereich von 3 bis 20 Gew.-% erwiesen hat.

Die inerten Partikeln liegen erfindungsgemäß als feinkörniges Material vor mit einer mittleren Korngröße im Bereich von 0,5 bis 40 µm, bestimmt durch Coulter Counter, vorzugsweise im Bereich von 1 bis 30 um, besonders bevorzugt von 2 bis 20 µm. Als besonders günstig hat es sich im Rahmen der vorliegenden Erfindung herausgestellt, wenn die inerten Partikeln keine unregelmäßige Gestalt, sondern eine runde, annähernd sphärische Form besitzen, vorzugsweise eine kugelige Form. Ferner hat es sich in der Praxis als besonders günstig erwiesen, wenn die inerten Partikeln eine poröse Struktur besitzen, vorzugsweise eine offenporige Struktur mit einer spezifischen Oberfläche im Bereich von 0,5 bis 10 m5/g, gemessen nach BET.

Erfindungsgemäß ist es besonders günstig, wenn die inerten Partikeln eine enge Korngrößenverteilung besitzen, d.h. die Menge der Partikeln, deren tatsächliche Korngröße vom Mittelwert nach oben oder nach unten abweicht, soll möglichst gering sein. Bei Partikeln, die für den Einsatz in der erfindungsgemäßen Beschichtungsmasse besonders gut geeignet sind, ist die Menge an Partikeln, deren tatsächliche Korngröße vom angegebenen Mittelwert um mehr als 50 % nach unten Abweicht, kleiner/gleich 6 %, vorzugsweise kleiner/gleich 3 %, und die Menge an Partikeln, deren tatsächliche Korngröße vom angegebenen Mittelwert um mehr als 100 % nach oben abweicht, kleiner/gleich 6 %, vorzugsweise kleiner/gleich 3 %.

Gegenstand der vorliegenden Erfindung ist auch ihre Verwendung zum Herstellen einer Beschichtung auf einem Formteil aus Kautschuk enthaltend die Beschichtungsmasse und zusätzlich eine Haftvermittler Schicht, die in unmittelbarem Kontakt zu der Kautschukoberfläche steht und auf deren äußerer Oberfläche die erfindungsgemäße Beschichtungsmasse angeordnet ist.

Als Haftvermittler eignen sich erfindungsgemäß Primer auf Basis von Ethylen/Acrylamid Comonomeren, von Polyurethanen oder von niedrig chlorierten Polypropylenen, die normalerweise in organischen Lösemitteln wie Xylol, Toluol oder Dimethylsulfoxid gelöst oder suspendiert sind. Auf der äußeren, freien Oberfläche der Haftvermittlerschicht, die in aller Regel eine Schichtdicke von weniger als 1 µm besitzt, ist die erfindungsgemäße Beschichtungsmasse aufgetragen, die nach Trocknen und Aushärten in aller Regel eine Schichtdicke im Bereich von 1 bis 30 µm besitzt, vorzugsweise von 2 bis 20 µm, ganz besonders bevorzugt von 2,5 bis 15 µm.

Die erfindungsgemäße Beschichtung kann durch übliche Auftragsmethoden wie Pinseln, Tauchen, Sprühen oder Drucken aufgebracht werden, wobei die Gleichmäßigkeit der Schichtdicke durch die Viskosität der verwendeten Beschichtungsmasse gut eingestellt werden kann.

Nachfolgend wird die Erfindung für den Fachmann durch Ausführungsbeispiele noch anschaulicher beschrieben, wobei der Schutz für die Erfindung ausdrücklich nicht auf die konkret dargestellte Ausführungsform beschränkt sein soll.

### Beispiel 1 (erfindungsgemäß)

Ein Probekörper in Form einer Dichtungsleiste für eine Kraftfahrzeug (Kfz) -Tür mit einer Länge von 10 cm aus EPDM Kautschuk wurde nach gründlicher Reinigung seiner Oberfläche mit einem Haftvermittler auf Basis von Polyurethan in Xylol, erhältlich unter der Bezeichnung ⁷ELBESOL Primer 771, bei L. Böwing GmbH, Deutschland, beschichtet.

Dann wurde eine Beschichtungsmasse hergestellt, enthaltend ein vernetzbares Siliconharz in Toluol und eine Menge von 10 Gew.-% sphärische Polyamidpartikeln mit einer mittleren Korngröße von 10 µm. Die fertige Beschichtungsmasse wurde dann durch Aufpinseln auf die freie Oberfläche des Haftvermittlers auf den Probekörper aufgebracht.

Der beschichtete Probekörper wurde danach mit der sorgfältig gereinigten Oberfläche eines Schutzlackes, wie er für die Kfz-Lackierung üblicherweise verwendet wird, der auf einem 30 x 30 cm großen Metallblech aufgebracht war, in Verbindung gebracht und mehrfach auf dem Schutzlack unter leichtem Anpressen, wie es dem Anpressdruck einer geschlossenen Fahrzeugtür entspricht, hin und her bewegt. Das Ergebnis ist in der am Ende der Beschreibung aufgeführten Tabelle dargestellt.

### Beispiel 2 (erfindungsgemäß)

Es wurde wie in Beispiel 1 verfahren, nur wurde als Probekörper ein Dichtungselement aus TPE Kautschuk mit einer Länge von 12 cm verwendet. Primer und Beschichtungsmasse waren gleich wie in Beispiel 1. Das Ergebnis ist der nachfolgenden Tabelle zu entnehmen.

### Beispiel 3 (Vergleichsbeispiel)

Es wurde der Haftvermittler wie in Beispiel 1 auf einen Probekörper aus TPE Kautschuk aufgetragen. Dann wurde jedoch eine übliche Beschichtung enthaltend ein Alkydharz in Toluol auf die freie Oberfläche des Haftvermittlers auf dem Probekörper aufgebracht. Nach Trocknen und Aushärten über einen Zeitraum von 2 h bei Umgebungstemperatur wurde der Probekörper nach demselben Verfahren getestet wie in den Beispielen 1 und 2. Das Ergebnis ist in der nachfolgenden Tabelle dargestellt.

**Tabelle:**

| | Geräuschentwicklung |
|---|---|
| **Beispiel 1** | - - - |
| **Beispiel 2** | - - - |
| **Beispiel 3** | +++ |
| - - - bedeutet: Keinerlei Geräusch wurde beobachtet. | |
| +++ bedeutet: Knackende und quietschende Geräusche entstanden bei der Bewegung. | |

## Patentansprüche

1. Beschichtungsmasse enthaltend Harz zum Überziehen von Kautschuk oder Elastomeren, **dadurch gekennzeichnet, dass** sie ein synthetisches Harz enthält und zusätzlich inerte Partikeln in einer Menge im Bereich von 0,1 bis 50 Gew.-%, bezogen auf die Gesamtmasse der Beschichtungsmasse.

2. Beschichtungsmasse nach Anspruch 1, **dadurch gekennzeichnet, dass** sie als synthetisches Harz Acrylharze, Alkydharze, Epoxidharze, Melaminharze, Phenolharze, Polyesterharze oder Siliconharze enthält, vorzugsweise vernetzbare Phenylsiliconharze.

3. Beschichtungsmasse nach Anspruch 1 oder 2, **dadurch gekennzeichnet, dass** die inerten Partikeln anorganische Materialien wie Talkum, Kalziumkarbonat, Bariumcarbonat, Bariumsulfat, Siliziumdioxid, Titandioxid und ähnliche sind oder organische Partikeln aus wasserunlöslichem Harnstoffpolykondensat oder aus Polymeren, vorzugsweise aus Polyethylen, Polypropylen, Polyamid, Polymethylmethacrylat (PMMA), Siliconelastomer oder Polystyrol.

4. Beschichtungsmasse nach einem der Ansprüche 1 bis 3, **dadurch gekennzeichnet, dass** sie die inerten Partikeln in einer Menge im Bereich von 0,5 bis 40 Gew.-% enthält, bevorzugt von 1 bis 30 Gew.-%, besonders bevorzugt von 3 bis 20 Gew.-%.

5. Beschichtungsmasse nach einem der Ansprüche 1 bis 4, **dadurch gekennzeichnet, dass** sie die inerten Partikeln als feinkörniges Material enthält mit einer mittleren Korngröße im Bereich von 0,5 bis 40 µm, vorzugsweise von 1 bis 30 µm, besonders bevorzugt von 2 bis 20 µm.

6. Beschichtungsmasse nach einem der Ansprüche 1 bis 5, **dadurch gekennzeichnet, dass** die inerten Partikeln eine runde, annähernd sphärische Form besitzen, vorzugsweise eine kugelige Form.

7. Verwendung einer Beschichtungsmasse nach einem oder mehreren der Ansprüche 1 bis 6 zum Herstellen einer Beschichtung auf einem Formteil aus Kautschuk oder Elastomeren enthaltend zusätzlich eine Haftvermittlerschicht, die in unmittelbarem Kontakt zu der Kautschukoberfläche steht und auf deren äußerer Oberfläche die Beschichtungsmasse angeordnet ist.

8. Beschichtung nach Anspruch 7, **dadurch gekennzeichnet, dass** sie als Haftvermittler Verbindungen auf Basis von Ethylen/Acrylamid Comonomeren oder auf Polyurethanen enthält.

9. Beschichtung nach Anspruch 7 oder 8, **dadurch gekennzeichnet, dass** sie eine Schichtdicke im Bereich von 1 bis 30 µm besitzt, vorzugsweise von 2 bis 20 µm, besonders bevorzugt von 2,5 bis 15 µm.

10. Verfahren zum Unterdrücken von Geräuschentwicklung beim Verschieben der Oberfläche von Dichtungen aus Kautschuk oder Elastomeren über Fahrzeuglack oder Glas, **dadurch gekennzeichnet, dass** auf die Dichtungen aus Elastomeren eine Beschichtung nach einem oder mehreren der Ansprüche 7 bis 9 aufgetragen wird.
